# EUROPÄISCHE PATENTSCHRIFT

(11) **EP 3 569 770 B1**
(45) Veröffentlichungstag und Bekanntmachung des Hinweises auf die Patenterteilung: **25.05.2022**
(21) Anmeldenummer: 19171176.1
(22) Anmeldetag: 25.04.2019
(51) Int. Cl.: E02D 5/56, E02D 7/22, E02D 13/06, E02D 33/00

(54) **VERFAHREN ZUR BELASTUNGSPRÜFUNG VON SCHRAUBFUNDAMENTEN**
METHOD OF INVESTIGATING THE BEARING CAPACITY OF SCREW PILE FOUNDATIONS
PROCÉDÉ D'INVESTIGATION DE LA CAPACITÉ DES PIEUX ENTOURNÉS

(30) Priorität: 25.04.2018 CH 5302018
(43) Veröffentlichungstag der Anmeldung: 20.11.2019
(73) Patentinhaber: Krinner Innovation GmbH, 94342 Strasskirchen (DE); z-part GmbH, 3272 Walperswil (CH)
(72) Erfinder: Züger, Dominik, 3272 Walperswil (CH); Thurner, Günther, 94342 Strasskirchen (DE)
(74) Vertreter: BOVARD AG

(56) Entgegenhaltungen:
- EP-A2- 1 520 938
- DE-A1-102005 045 574
- DE-A1-102008 037 937
- DE-B3-102010 043 785
- DE-T5-112015 004 780

## Beschreibung

### Technisches Gebiet der Erfindung

Die vorliegende Erfindung bezieht sich zum einen auf ein Verfahren zur Belastungsprüfung von Schraubfundamenten. Insbesondere bezieht sich die Erfindung in diesem Zusammenhang auf ein Verfahren bei welchem die Bestimmung der Schraubfundamente, an welchen die Belastungsprüfung durchgeführt werden soll, auf der Basis der Eindrehmoment-Weg-Kurven der Schraubenfundamente gemacht wird.

Die vorliegende Erfindung bezieht sich ausserdem auch auf ein Verfahren und eine Vorrichtung zur Baugrundcharakterisierung. Insbesondere bezieht sich die Erfindung in diesem Zusammenhang auf ein Verfahren, bei welchem die Baugrundcharakterisierung aufgrund der Eindrehmoment-Weg-Kurven von Testkörpern gemacht wird sowie auf eine Vorrichtung zur Baugrundcharakterisierung. Insbesondere, bezieht sich die Erfindung auf eine Vorrichtung, welche eine formfaktorunabhängige Baugrundcharakterisierung ermöglicht.

### Stand der Technik

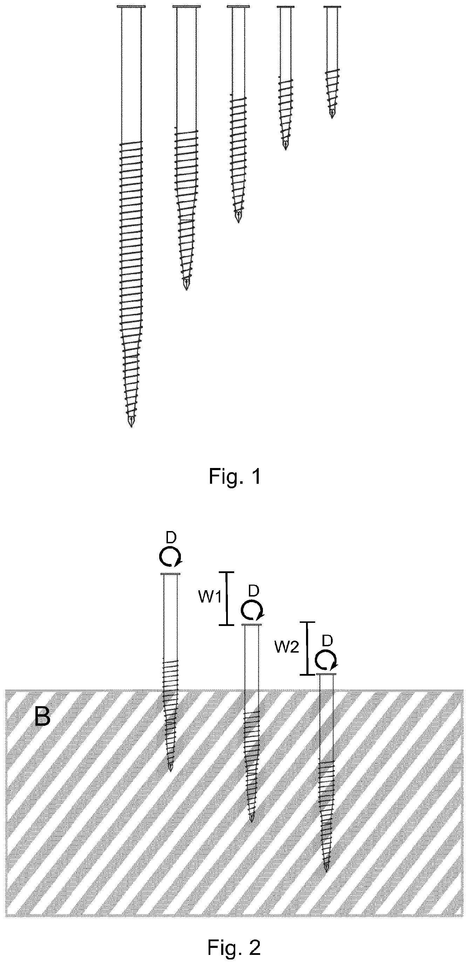

Schraubfundamente oder Bodenschrauben, normalerweise aus Stahl, stellen eine interessante Alternative zu Fundamenten aus Beton dar. Ihre Länge kann von einigen zehn Zentimetern bis zu mehreren Metern variieren. Allgemein betrachtet haben Schraubfundamente eine mit einer normalen Schraube vergleichbare Form, d.h. sie bestehen aus einem länglichen Körper in Form eines Zylinders mit einem Teil, welcher ein Aussengewinde umfasst. Schraubfundamente sind oft als Hohlkörper ausgebildet, welcher mit einem Flansch abgeschlossen ist. Figur 1 zeigt einige Beispiele für typische Schraubfundamente.

Der grosse Vorteil von Schraubfundamenten liegt darin, dass sie sofort belastbar, vollständig rückbaubar und wiederverwendbar sind. Darüber hinaus müssen keine Aushärtezeiten abgewartet werden. Schraubfundamente werden zunehmend in den unterschiedlichsten Situationen eingesetzt, zum Beispiel als Fundamente für Lärmschutzwände, Solarpanels, oder für kleine oder mittelgrosse Häuser.

Wie alle Fundamente, müssen Schraubfundamente nach Ihrem Einbringen in den Boden auf Ihre Tragfähigkeit geprüft werden. Die Prüfung von Fundamenten auf ihre Tragfähigkeit erfolgt heutzutage meist durch statische Prüfverfahren. Diese Verfahren sind leider lang und aufwändig. Schnellere Verfahren, insbesondere dynamische Verfahren, sind oft zu ungenau. Lange Prüfzeiten und aufwändige Installationen verursachen bei Prüfungen von Fundamenten hohe Kosten und verzögern, durch die geforderten Testzeiten, den Abschluss des Bauvorhabens. Ungenauigkeiten bedingen kostspielige Überdimensionierungen.

Darüber hinaus werden die heute durchgeführten Prüfverfahren an einigen zufällig ausgewählten Schraubfundamenten in einem Baufeld durchgeführt. Somit gibt es für den Grossteil der eingebrachten Schraubfundamente keinen Nachweis Ihrer Tragfähigkeit. Dies kann leider ein erhebliches Sicherheitsrisiko darstellen. Um das Risiko zu minimieren, muss durch die bestehenden Verfahren eine Mindestanzahl von Schraubfundamenten auf dem Baufeld geprüft werden. Um die unvermeidlichen Unsicherheiten abzudecken, werden daher heute relativ grosse Überdimensionierungen in Kauf genommen. Dies erhöht natürlich die gesamte Prüfzeit, verzögert wiederum den Abschluss des Bauvorhabens und kostet daher unnötig Geld.

Darüber hinaus erfolgt die Planung eines Bauvorhabens, bei welcher Schraubfundamente eingesetzt werden, in der Regel durch das Einbringen von für das Projekt ausgewählten, kommerziellen Schraubfundamenten und die Messung ihres Verhaltens auf statische Belastungen. Diese Messungen sind für eine optimale Planung oft nicht relevant genug. Insbesondere lässt sich mit diesen Messungen nicht genau bestimmen, welcher Typ von Schraubfundament an welcher Stelle eingesetzt werden soll. Eine Optimierung betreffend dem oft individuell geschichtetem Baugrund, dem lokalen Lastabtrag und der Modellwahl ist nicht möglich, da ja nur das Verhalten eines bestimmten kommerziellen Fundamentes an einem Einbaupunkt gemessen wurde und die Eigenschaften des Bodens nicht schichtweise genau bestimmen. Dies bedeutet auch, dass bei einer Projektänderung während der Planungsphase die Messungen bei einer Modelländerung zu einer hohen Ungenauigkeit bei der Vorhersage führen beziehungsweise, dass die Messungen mit dem neu gewählten Schraubfundament-Modell nochmals wiederholt werden müssen. Dies führt zu hohen Kosten und zeitlichen Verzögerungen in der Planung und damit auch Umsetzung des Bauvorhabens.

EP 1520938 A2 offenbart ein Verfahren zum Bestimmen des Tragverhaltens von Verdrängungspfählen.

Ausgehend vom Stand der Technik liegt der vorliegenden Erfindung daher die Aufgabe zugrunde, vorbesagte Nachteile zu überwinden und ein Verfahren zur Belastungsprüfung von Schraubfundamenten zur Verfügung zu stellen, welches genauere, schnellere Belastungsprüfungen von Schraubfundamenten ermöglicht. Ein Ziel der vorliegenden Erfindung ist auch ein Verfahren vorzuschlagen, welches eine präzise Baugrundcharakterisierung und damit eine effizientere Baustelleplanung ermöglicht. Ein weiteres Ziel der vorliegenden Erfindung ist es, eine Vorrichtung vorzuschlagen, die es erlaubt, den Baugrund schichtweise zu charakterisieren.

### Zusammenfassung der Erfindung

Gemäss der vorliegenden Erfindung werden diese Ziele vor allem durch die Elemente des unabhängigen Anspruchs erreicht. Weitere vorteilhafte Ausführungsformen gehen ausserdem aus den abhängigen Ansprüchen und der Beschreibung hervor.

Insbesondere werden die Ziele der vorliegenden Erfindung durch ein Verfahren zur Überprüfung der Tragfähigkeit von Schraubfundamenten erreicht, welches die folgenden Schritte umfasst:
a. Eindrehung der Schraubfundamenten in den Boden,
b. Bestimmung der Schraubfundamente an welchen eine Belastungsprüfung zur Überprüfung ihrer Tragfähigkeit durchgeführt werden soll,
c. Durchführung der Belastungsprüfung an den bestimmten Schraubfundamenten,
wobei für jedes Schraubfundament das Eindrehmoment und der Eindrehweg während der Eindrehung kontinuierlich gemessen werden, wobei für jedes Schraubfundament eine Eindrehmoment-Weg-Kurve erstellt wird, und wobei die Bestimmung der Schraubfundamente, an welchen die Belastungsprüfung durchgeführt werden soll, auf der Basis der Eindrehmoment-Weg-Kurve gemacht wird.

Dank eines solchen Verfahrens wird die Bestimmung der Schraubfundamente, an welchen die Belastungsprüfung durchgeführt werden soll, selektiv statt zufällig gemacht. Es konnte nämlich gezeigt werden, dass es einen engen Zusammenhang zwischen der Eindrehmoment-Weg-Kurve eines Schraubfundaments und dessen Bruchlast beziehungsweise dem statischen Verhalten unter Belastung existiert. Die Schraubfundamente, welche geprüft werden sollen, können daher aufgrund der Informationen bestimmt werden, welche der Eindrehmoment-Weg-Kurve entnommen werden können. Mit anderen Worten kann aufgrund des wissenschaftlich nachgewiesenen Zusammenhangs statt einer zufälligen, eine selektive Prüfung der schlechtesten Schraubfundamente erfolgen. Dies führt zur Reduktion der statistisch notwendig zu prüfenden Schraubfundamente.

Zudem kann der für einen Fachmann bekannte Streuungsfaktor bezüglich der anzusetzenden Bemessungslast aufgrund der selektiven Prüfung der schlechtesten Schraubfundamente bis auf den Wert 1 reduziert werden.

Somit ergibt sich eine Reduktion der Anzahl zu prüfender Schraubfundamente, eine Reduktion der Prüfzeit und infolge der Reduktion der anzusetzenden Prüflast eine Reduktion der notwendigen Prüfinstallation. Für den Kunden entfallen demzufolge durch die Beschleunigung des Bauprozesses und die Eliminierung der Wartezeit weitere Kosten. Es konnte auch gezeigt werden, dass es hinreichend ist, die aufgrund der Eindrehmoment-Weg-Kurve "schlechtesten", d.h. die am wenigsten tragfähigen Schraubfundamente tatsächlich auf ihre Tragfähigkeit zu überprüfen. Wenn diese schwächsten Schraubfundamente die Kriterien einer Tragfähigkeitsprüfung erfüllen, dann kann mit Sicherheit festgestellt werden, dass alle Fundamente die statischen Anforderungen erfüllen.

Darüber hinaus, erhöht das erfindungsgemässe Verfahren die Sicherheit, da für jedes Fundament eine Eindrehmoment-Weg-Kurve erstellt wird. Ein schlechtes Fundament kann daher sofort erkannt werden. Im Gegenteil hierzu ist es mit den Verfahren aus dem Stand der Technik teilweise nur durch Zufall möglich, die schlechten Fundamente zu entdecken. Ausserdem erlaubt das erfindungsgemässe Verfahren auch die situative Anpassung der Einbautechnik oder Modellwahl während des Einbauprozesses.

Ausserdem ermöglicht das erfindungsgemässe Verfahren eine Rückverfolgbarkeit. Jedes Schraubfundament bekommt eine Eindrehmoment-Weg-Kurve zugewiesen. Dies kann im Falle von zukünftigen Problemen von Vorteil sein, da es ein noch besseres Verständnis der komplexen Beziehung zwischen Eindrehmoment und Bruchlast ermöglicht.

Die relevanten Informationen für die Bestimmung der schlechtesten Schraubfundamente können auf verschiedene Art und Weise aus der Eindrehmoment-Weg-Kurve extrahiert werden. Zum Beispiel können die ersten und zweiten Ableitungen der Eindrehmoment-Weg-Kurve hochrelevante Informationen liefern. Es ist besonders wichtig zu beachten, dass je nach Situation, in der das Schraubfundament verwendet wird, die Interpretation der Eindrehmoment-Weg-Kurve nicht die gleiche ist. Beispielsweise, soll eine Eindrehmoment-Weg-Kurve eines Schraubfundaments, das in einer Situation verwendet werden soll, in der es einer Druckbelastung standhalten muss, nicht die gleiche sein wie bei einem Schraubfundament, das eine Zugbelastung tragen muss.

Zur Messung des Drehmoments können direkt Kraftsensoren verwendet werden, welche an der Maschine angebracht sind, die für die Eindrehung der Schraubfundamente gebraucht wird. Zudem ist aber auch eine direkte Messung durch Kraftsensoren, die am Schraubfundament selbst installiert sind, möglich. Es ist aber auch möglich eine indirekte Messung des Drehmoments zu verwenden, welche auf der Messung des Stromes (elektrische Einbaugeräte) bzw. des Druckes (flüssigkeitsbasierte Drehgeräte) unter Berücksichtigung von antriebsspezifischen Multiplikatoren basiert. Der Eindrehweg kann auch sehr einfach durch für einen Fachmann bekannte Mittel gemessen werden.

In einer bevorzugten Ausführungsform des erfindungsgemässen Verfahrens wird zusätzlich der Eindrehvorgang so aufgezeichnet, dass eine Eindrehmoment-Zeit-Kurve erstellt wird, und dass die Bestimmung der Schraubfundamente, an welchen die Belastungsprüfung durchgeführt werden soll, zusätzlich auf der Basis der Eindrehmoment-Zeit-Kurve gemacht wird. Dadurch kann die Bestimmung der Schraubfundamente, an welchen die Belastungsprüfung durchgeführt werden soll, noch präziser gemacht werden.

In einer anderen bevorzugten Ausführungsform des erfindungsgemässen Verfahrens wird während der Eindrehung zusätzlich die Winkelgeschwindigkeit gemessen. Mittels Winkelgeschwindigkeit und Windungssteigung des Schraubfundaments kann ein Eindrehrotationsweg berechnet werden und mit dem tatsächlich gemessenen Eindrehweg verglichen werden. Die Bestimmung der Schraubfundamente, an welchen die Belastungsprüfung durchgeführt werden soll, wird dann auf der Basis dieses Vergleichs gemacht. Dadurch kann eine sogenannte Schlupf-Analyse gemacht werden. Damit ist gewährleistet, dass, wenn bei der Eindrehung ein Schlupf des Fundaments auftritt, dieser bei der Bestimmung der Schraubfundamente, an welchen die Belastungsprüfung durchgeführt werden soll, berücksichtigt wird.

In einer weiteren bevorzugten Ausführungsform des erfindungsgemässen Verfahrens wird die Bestimmung der Schraubfundamente, an welchen die Belastungsprüfung durchgeführt werden soll, zusätzlich auf der Basis von vorhergehenden Bodenbeurteilungen gemacht.

Dadurch kann sichergestellt werden, dass eine Tragfähigkeitsprüfung an den Schraubfundamenten, welche die schlechtesten Eindrehmoment-Weg-Kurven haben, und die sich in dem am wenigsten tragfähigen Boden befinden, durchgeführt wird.

In einer weiteren bevorzugten Ausführungsform des erfindungsgemässen Verfahrens wird die Bestimmung der Schraubfundamente, an welchen die Belastungsprüfung durchgeführt werden soll, auf der Basis des Betrags des Eindrehmoment-Weg-Kurve-Integrals gemacht.

Es konnte nämlich gezeigt werden, dass eine besonders hohe Korrelation zwischen dem Betrag des Eindrehmoment-Weg-Kurve-Integrals und der Bruchlast eines Schraubfundaments existiert. Mit dem Betrag des Eindrehmoment-Weg-Kurve-Integrals können daher die schlechtesten Schraubfundamente einfach und genau identifiziert werden. Üblicherweise wird der Betrag des Eindrehmoment-Weg-Kurve-Integrals über den gesamten Eindrehweg bestimmt und für die Bestimmung der schlechtesten Schraubfundamente gebraucht. Es ist aber auch denkbar einen Betrag des Integrals nur über einen Teilbereich des Eindrehwegs zu bestimmen und zu benutzen. Dies kann insbesondere vorteilhaft sein, wenn das Schraubfundament in einem sehr heterogenen Boden eingedreht wurde. Für ein Fundament, das eine Druckbelastung aufnehmen muss, ist es vorteilhaft, den Wert des Integrals über den Bereich des Eindrehweges zu bestimmen, der dem Ende der Eindrehung entspricht. Im Gegenteil ist es für ein Fundament, das eine Zugbelastung aufnehmen muss, vorteilhaft, den Wert des Integrals über den gesamten Eindrehweg zu bestimmen.

In einer anderen bevorzugten Ausführungsform des erfindungsgemässen Verfahrens wird die Bestimmung der Schraubfundamente, an welchen die Belastungsprüfung durchgeführt werden soll, auf der Basis des Eindrehmomentmaximums gemacht.

Es konnte nämlich gezeigt werden, dass eine hohe Korrelation auch zwischen dem Maximum der Eindrehmoment-Weg-Kurve und der Bruchlast eines Schraubfundaments existiert. Damit können die schlechtesten Schraubfundamente noch präziser identifiziert werden. Mit der Position des Maximums der Eindrehmoment-Weg-Kurve können auch wichtige Informationen über die Bodenbeschaffenheit und die am besten geeignete Eindrehtiefe des Schraubfundaments gewonnen werden.

In einer weiteren bevorzugten Ausführungsform des erfindungsgemässen Verfahrens wird die Bestimmung der Schraubfundamente, an welchen die Belastungsprüfung durchgeführt werden soll, auf der Basis des Eindrehmomentendwertes gemacht.

Dies ist besonders vorteilhaft für die Bestimmung der schlechtesten Schraubfundamente, die eine Druckbelastung aufnehmen müssen. Ein tiefer Eindrehmomentendwert heisst nichts anderes, als dass die Spitze des Fundaments sich in einem nicht tragfähigen Boden befindet. Dieses Fundament könnte daher eine Druckbelastung schlecht aufnehmen.

In einer weiteren bevorzugten Ausführungsform des erfindungsgemässen Verfahrens wird nach der Eindrehung des Schraubfundaments das Fundament zurückgedreht. Während der Rückwärtsdrehung werden das Drehmoment und der Weg gemessen. Anschliessend wird eine Drehmoment-Weg-Kurve für die Rückwärtsdrehung erstellt, und die Bestimmung der Schraubfundamente, an welchen die Belastungsprüfung durchgeführt werden soll, auf der Basis der Drehmoment-Weg-Kurve für die Rückwärtsdrehung gemacht.

Aus der Drehmoment-Weg-Kurve für die Rückwärtsdrehung können Informationen über die Haftreibung und die Gleitreibung des Fundaments gewonnen werden. Mit einem Vergleich zwischen der Eindrehmoment-Weg-Kurve und der Drehmoment-Weg-Kurve für die Rückwärtsdrehung kann ermittelt werden, wie gross die Tragfähigkeit von verschiedenen Abschnitten des Fundaments ist. Insbesondere kann eine sogenannte Differenz-Kurve, welche aus der Differenz der Eindrehmoment-Weg-Kurve und der Drehmoment-Weg-Kurve für die Rückwärtsdrehung erstellt wird, dafür sehr hilfreich sein. Mit einem Vergleich zwischen der Eindrehmoment-Weg-Kurve und der Drehmoment-Weg-Kurve für die Rückwärtsdrehung kann insbesondere der Anteil von Mantelreibung und Spitzenwiderstand ermittelt werden. Durch den Vergleich des gemessenen Drehmomentes zu Beginn des Rückwärtsdrehens - basierend auf der zu überwindenden Haftreibung - mit dem darauf folgenden Drehmoment aufgrund der Gleitreibung - kann die Auswahl der zu prüfendenden Fundamente noch selektiver gemacht werden.

Der Kurvenverlauf der Rückwärtsdrehung und der Kurvenverlauf der Differenzkurve zwischen Eindreh- und Ausdrehvorgang ist ein Hinweis auf die Baugrundeigenschaft bzw. Charakteristika des Baugrunds. Tatsächlich setzt das Vorhandensein eines akzentuierten Peaks in der Differenzkure zu Beginn der Rückwärtsdrehung eine hohe Haftreibung und damit ein bindiger Boden mit erhöhtem Risiko des Kriechverhaltens voraus.

In einer weiteren bevorzugten Ausführungsform des erfindungsgemässen Verfahrens wird die Bestimmung der Schraubfundamente, an welchen die Belastungsprüfung durchgeführt werden soll, zusätzlich auf der Basis der am Schraubfundament abzutragenden Last gemacht.

Es ist üblich, dass bei Bauwerken die ermittelten abzutragenden Lasten pro Fundamentpunkt nicht gleich sind. Diesem Umstand kann Rechnung getragen werden, indem die durch die Eindrehmoment-Weg-Kurve gewonnenen Informationen in Bezug auf die Belastung, die die Fundamente tragen müssen, relativiert werden. So ist es akzeptabel, dass ein Fundament, das nur eine mittelmässige Belastung tragen muss, eine durchschnittliche Eindrehmoment-Weg-Kurve besitzt, während ein Fundament, das eine hohe Belastung tragen muss, eine Eindrehmoment-Weg-Kurve, welche eine hohe Tragfähigkeit voraussetzt, haben muss. Die Bestimmung der Schraubfundamente, an welchen die Belastungsprüfung durchgeführt werden soll, kann daher noch selektiver gemacht werden.

Zu beachten ist es, dass die Bestimmung mit dem erfindungsgemässen Verfahren der Schraubfundamente an welchen die Belastungsprüfung durchgeführt werden soll, auch aufgrund einer Kombination des Betrags des Eindrehmoment-Weg-Kurve-Integrals, des Eindrehmomentmaximums, des Eindrehmomentendwerts oder der am Schraubfundament abzutragenden Last gemacht werden kann.

Die vorliegende Erfindung schlägt ausserdem auch ein Verfahren zur Bodencharakterisierung vor, umfassend die folgenden Schritte:
a. Eindrehung einer Testkörper in den Boden,
b. Kontinuierliche Messung des Eindrehmoments und des Eindrehweges während der Eindrehung,
c. Charakterisierung des Baugrunds,
wobei eine Eindrehmoment-Weg-Kurve erstellt wird, und wobei die Charakterisierung des Baugrunds auf der Basis der Eindrehmoment-Weg-Kurve gemacht wird.

Dank eines solchen Verfahrens wird die Charakterisierung des Baugrunds aufgrund der gleichen Parameter gemacht, welche im Nachhinein für die Bestimmung der Schraubfundamente, an welchen die Belastungsprüfung durchgeführt werden soll, gebraucht werden. Dadurch ist die Bodencharakterisierung viel aussagekräftiger. Es konnte nämlich gezeigt werden, dass ein enger Zusammenhang zwischen der Eindrehmoment-Weg-Kurve eines Testkörpers und der Baugrundbeschaffenheit existiert. Folglich wird dank des erfindungsgemässen Verfahrens die Baugrundcharakterisierung präziser gemacht, was die Planung einer Baustelle vereinfacht. Insbesondere kann dank dem erfindungsgemässen Verfahren besser entschieden werden, welche Schraubfundamente, insbesondere deren Bauform, Länge, Durchmesser und Position der funktionalen Elemente (Windungen, Teller, konusförmiger Teil), an welchen Orten eingesetzt werden sollen. Für den Kunden entfallen demzufolge Kosten dank der Beschleunigung des Planungsprozesses.

Die relevanten Informationen für die Charakterisierung des Baugrunds können auf verschiedene Art und Weise aus der Eindrehmoment-Weg-Kurve extrahiert werden. Zum Beispiel können die ersten und zweiten Ableitungen der Eindrehmoment-Weg-Kurve hochrelevante Informationen liefern. Es ist besonders wichtig zu beachten, dass je nach Situation, die Interpretation der Eindrehmoment-Weg-Kurve nicht die gleiche ist. Beispielsweise muss eine Eindrehmoment-Weg-Kurve eines Testkörpers, welche an einem Ort aufgenommen wird, wo ein Schraubfundament eine Druckbelastung standhalten muss, nicht die gleiche sein wie an einem Ort, wo ein Schraubfundament eine Zugbelastung tragen müssen wird.

Zur Messung des Drehmoments können direkt Kraftsensoren verwendet werden, welche an der Maschine, die für die Eindrehung des Testkörpers gebraucht wird, angebracht sind. Zudem ist die direkte Messung auch durch Kraftsensoren möglich, die am Testkörper selbst installiert sind. Eine indirekte Messung basiert auf der Messung des Stromes (elektrische Einbaugeräte) bzw. des Druckes (flüssigkeitsbasierte Drehgeräte) unter Berücksichtigung von antriebsspezifischen Multiplikatoren. Die wirkenden Drehmomente im jeweiligen Fundamentabschnitt können durch Dehnmessstreifen ermittelt werden. Der Eindrehweg kann auch sehr einfach durch für einen Fachmann bekannte Mittel gemessen werden.

In einer bevorzugten Ausführungsform des vorgeschlagenen Verfahrens wird zusätzlich der Eindrehvorgang so aufgezeichnet, dass eine Eindrehmoment-Zeit-Kurve erstellt wird und dass die Baugrundcharakterisierung, auf der Basis der Eindrehmoment-Weg-Kurve und der Eindrehmoment-Zeit-Kurve gemacht wird. Dadurch kann die Baugrundcharakterisierung noch präziser gemacht werden.

In einer anderen bevorzugten Ausführungsform des Verfahrens wird während der Eindrehung zusätzlich die Winkelgeschwindigkeit gemessen und ein Vergleich zwischen dem Eindrehrotationsweg und dem Eindrehweg gemacht. Die Baugrundcharakterisierung wird dann zusätzlich auf der Basis dieses Vergleichs gemacht.

Mittels Winkelgeschwindigkeit und Windungssteigung des Testkörpers können ein Eindrehrotationsweg ermittelt und ein Vergleich zwischen diesem Wert und dem gemessen Eindrehweg gemacht werden. Dadurch kann eine sogenannte Schlupf-Analyse gemacht werden. Damit ist gewährleistet, dass, wenn bei der Eindrehung ein Schlupf des Testkörpers auftritt, dieser bei der Baugrundcharakterisierung berücksichtigt wird.

In einer weiteren bevorzugten Ausführungsform des vorgeschlagenen Verfahrens wird die Baugrundcharakterisierung auf der Basis des Betrags des Eindrehmoment-Weg-Kurve-Integrals gemacht.

Es konnte nämlich gezeigt werden, dass eine besonders hohe Korrelation zwischen dem Betrag des Eindrehmoment-Weg-Kurve-Integrals und der Bodenbeschaffenheit existiert. Mit dem Betrag des Eindrehmoment-Weg-Kurve-Integrals kann daher die Baugrundcharakterisierung einfach und genau gemacht werden. Üblicherweise wird der Betrag des Eindrehmoment-Weg-Kurve-Integrals über den gesamten Eindrehweg bestimmt und für die Baugrundcharakterisierung gebraucht. Es ist aber auch denkbar einen Betrag des Integrals nur über einen Teilbereich des Eindrehwegs zu bestimmen und zu benutzen. Dies kann insbesondere vorteilhaft sein, wenn der Testkörper in einem sehr heterogenen Boden eingedreht wurde.

In einer bevorzugten Ausführungsform des vorgeschlagenen Verfahrens wird die Baugrundcharakterisierung auf der Basis des Eindrehmomentmaximums gemacht.

Es konnte nämlich gezeigt werden, dass eine hohe Korrelation auch zwischen dem Maximum der Eindrehmoment-Weg-Kurve und der Bodenbeschaffenheit existiert. Damit kann die Baugrundcharakterisierung noch präziser gemacht werden. Mit der Position des Maximums der Eindrehmoment-Weg-Kurve können auch wichtige Informationen über die am besten geeignete Eindrehtiefe eines Schraubfundaments gewonnen werden.

In einer weiteren bevorzugten Ausführungsform des vorgeschlagenen Verfahrens wird die Baugrundcharakterisierung auf der Basis des Eindrehmomentendwertes gemacht.

Dies ist besonders vorteilhaft für die Baugrundcharakterisierung an Orten, wo Schraubfundamente eine Druckbelastung aufnehmen müssen. Ein tiefer Eindrehmomentendwert heisst nichts anderes, als dass die Spitze des Fundaments sich in einem nicht tragfähigen Boden befinden wird. Dieses Fundament könnte daher eine Druckbelastung schlecht aufnehmen.

In einer weiteren bevorzugten Ausführungsform des vorgeschlagenen Verfahrens ist der Testkörper ein Schraubfundament. Dadurch kann den Baugrund für das genau zu verwendende Fundamentmodell charakterisiert werden.

In einer weiteren bevorzugten Ausführungsform des vorgeschlagenen Verfahrens ist der Testkörper eine Vorrichtung gemäss einem anderen Aspekt der vorliegenden Erfindung. Dadurch kann der Baugrund formfaktorunabhängig charakterisiert werden.

In einer weiteren bevorzugten Ausführungsform des vorgeschlagenen Verfahrens wird die Eindrehung schichtweise durchgeführt und für jede Schicht ein Belastungsversuch durchgeführt. Die Baugrundcharakterisierung wird zusätzlich auf der Basis des Verhaltens des Testkörpers während des Belastungsversuches gemacht. Daraus ergibt sich eine testkörperbasierte, tiefenabhängige Baugrundcharakterisierung. Dies erlaubt die Vorhersage des Lastabtragverhaltens von verschiedenen Schraubfundamente-Modellen bei unterschiedlicher Einbautiefe auch in inhomogenen, geschichteten Böden.

In einer weiteren bevorzugten Ausführungsform des vorgeschlagenen Verfahrens, wird der Belastungsversuch durchgeführt bis Bruch der Baugrundschicht erreicht ist. Dadurch kann eine präzisere Charakterisierung der Baugrundschicht gemacht werden.

Zu beachten ist es auch hier, dass die Charakterisierung des Baugrunds mit dem vorgeschlagenen Verfahren auch aufgrund einer Kombination des Betrags des Eindrehmoment-Weg-Kurve-Integrals, des Eindrehmomentmaximums, oder des Eindrehmomentendwerts gemacht werden kann.

Die vorliegende Erfindung schlägt ausserdem auch eine Vorrichtung zur Baugrundcharakterisierung vor, umfassend einen zylinderförmigen Teil einem mit Aussendurchmesser und einen konusförmigen Teil mit einem maximalen Aussendurchmesser, welcher konusförmige Teil ein Aussengewinde umfasst, welches derart konfiguriert ist, dass es die Eindrehung der Vorrichtung in den Baugrund ermöglicht, dadurch gekennzeichnet, dass der Aussendurchmesser des zylinderförmigen Teils kleiner ist als der maximale Aussendurchmesser des konusförmigen Teils ist.

Mittels der vorgeschlagenen Vorrichtung, kann eine präzise schichtweise Baugrundcharakterisierung erreicht werden. Da der Durchmesser des zylinderförmigen Teils der Vorrichtung kleiner ist als der maximale Durchmesser des konusförmigen Teils, sind die Reibungskräfte, die durch die Aussenfläche des zylinderförmigen Teils bei der Eindrehung und den Belastungsversuchen erzeugen werden, für die Baugrundcharakterisierung nicht relevant.

In einer bevorzugten Ausführungsform der vorgeschlagenen Vorrichtung ist der zylinderförmige Teil mittels weiteren zylinderförmigen Teilen verlängerbar. Dadurch können tiefere Schichten einfach erreicht werden. Weitere Einzelheiten der Erfindung gehen aus der nun folgenden Beschreibung der bevorzugten Ausführungsformen der Erfindung hervor, welche in den beigelegten Zeichnungen dargestellt sind. Der Beschreibung lassen sich auch die weiteren Vorteile der vorliegenden Erfindung entnehmen sowie Anregungen und Vorschläge, wie die Erfindungsgegenstände im Rahmen des Beanspruchten abgeändert oder auch weiterentwickelt werden könnte.

### Kurzbeschreibung der Zeichnungen

Figur 1 zeigt verschiedene Modelle von Schraubfundamenten
Figur 2 illustriert das Eindrehungsverfahren eines Schraubfundamentes
Figur 3 zeigt eine bevorzugte Ausführungsform eines ersten erfindungsgemässen Verfahrens zur Belastungsprüfung von Schraubfundamenten.
Figur 4 zeigt eine schematische Darstellung einer Eindrehmoment-Weg-Kurve.
Figur 5 zeigt gemessene Eindrehmoment-Weg-Kurven
Figur 6 zeigt eine gemessene Eindrehmoment-Zeit-Kurve
Figur 7 zeigt einen Graph, der den Zusammenhang zwischen der Bruchlast und dem Eindrehmoment nachweist.
Figur 8 zeigt eine bevorzugte Ausführungsform eines vorgeschlagenen Verfahrens zur Baugrundcharakterisierung.
Figur 9 illustriert eine bevorzugte Ausführungsform des vorgeschlagenen Verfahrens zur Baugrundcharakterisierung.
Figur 10A zeigt eine Seitensicht einer bevorzugten Ausführungsform einer vorgeschlagenen Vorrichtung zur Baugrundcharakterisierung.
Figur 10B zeigt eine perspektivische Sicht einer bevorzugten Ausführungsform einer vorgeschlagenen Vorrichtung zur Baugrundcharakterisierung.

### Bevorzugte Ausführungsformen der Erfindung

Figur 2 illustriert schematisch den Eindrehungsvorgang eines Schraubfundaments SF in den Boden B. Während der Eindrehung werden, mittels für einen Fachmann bekannten Mitteln, der Eindrehweg W und das Eindrehmoment D kontinuierlich gemessen.

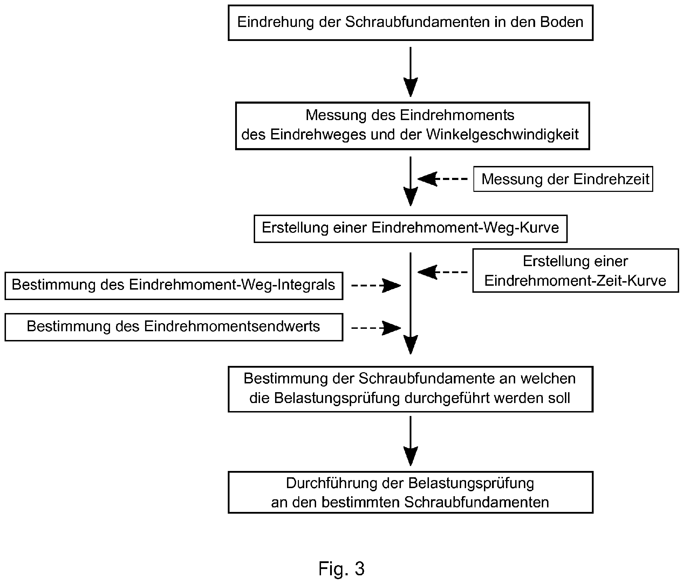

Figur 3 illustriert eine bevorzugte Ausführungsform des ersten erfindungsgemässen Verfahrens zur Überprüfung der Tragfähigkeit von Schraubfundamenten. Gemäss dieser Ausführungsform fängt das erfindungsgemässe Verfahren mit der Eindrehung der Schraubfundamente in den Boden an. Während der Eindrehung werden Eindrehweg und Eindrehmoment und Winkelgeschwindigkeit für jedes Fundament kontinuierlich gemessen. Anschliessend wird eine Eindrehmoment-Weg-Kurve erstellt. Wie in dieser Figur dargestellt, können auch die Eindrehzeit gemessen und eine Eindrehmoment-Zeit-Kurve erstellt werden. Aufgrund von zumindest der Eindrehmoment-Weg-Kurve werden die "schlechtesten" Schraubfundamente identifiziert. Unter dem Begriff "schlechteste Schraubfundamente" sind also solche Schraubfundamente zu verstehen, für welche eine am wenigsten optimale Tragfähigkeit erwartet werden kann. Wie in dieser Figur gezeigt, ist ein wichtiger Parameter für die Identifikation dieser "schlechtesten" Fundamente das Eindrehmomentendwert. Insbesondere für Fundamente, welche eine Druckbelastung tragen müssen, ist dieses Wert hochrelevant. Ein anderer möglicher Parameter ist der Betrag des Eindrehmoment-Weg-Integrals. Nach der Bestimmung, aufgrund der Eindrehmoment-Weg-Kurve bzw. der Eindrehmoment-Zeit-Kurve, der Schraubfundamente, an welchen die Belastungsprüfung durchgeführt werden soll, wird diese Prüfung an genau diesen Schraubfundamenten durchgeführt.

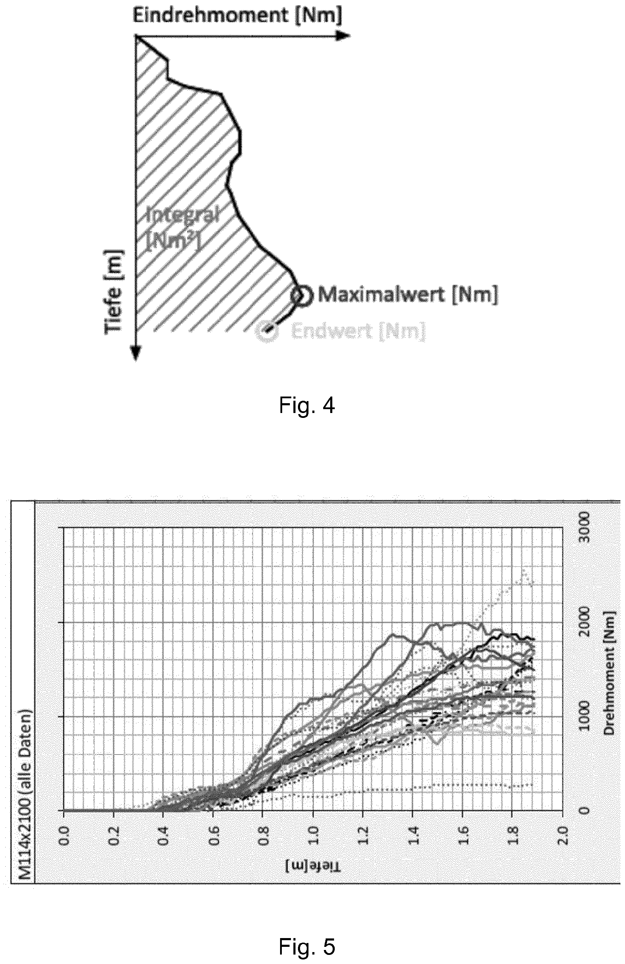

Figur 4 stellt schematisch eine Eindrehmoment-Weg-Kurve dar. Wie in dieser Figur zu sehen ist, nimmt das Eindrehmoment mit der Eindrehtiefe zu. Der Verlauf der Kurve ist aber nicht regelmässig und ein Eindrehmomentmaximum kann identifiziert werden. Mit dieser Kurve, können auch das Eindrehmomentendwert und der Betrag des Integrals bestimmt werden.

Figur 5 zeigt tatsächlich gemessene Eindrehmoment-Weg-Kurven, welche immer mit dem gleichen Schraubfundamentmodell gemessen wurden. Wie es von dieser Figur zu sehen ist, können Verlauf, Integral, Maximum und Endwert abhängig vom Ort der Eindrehung stark schwanken.

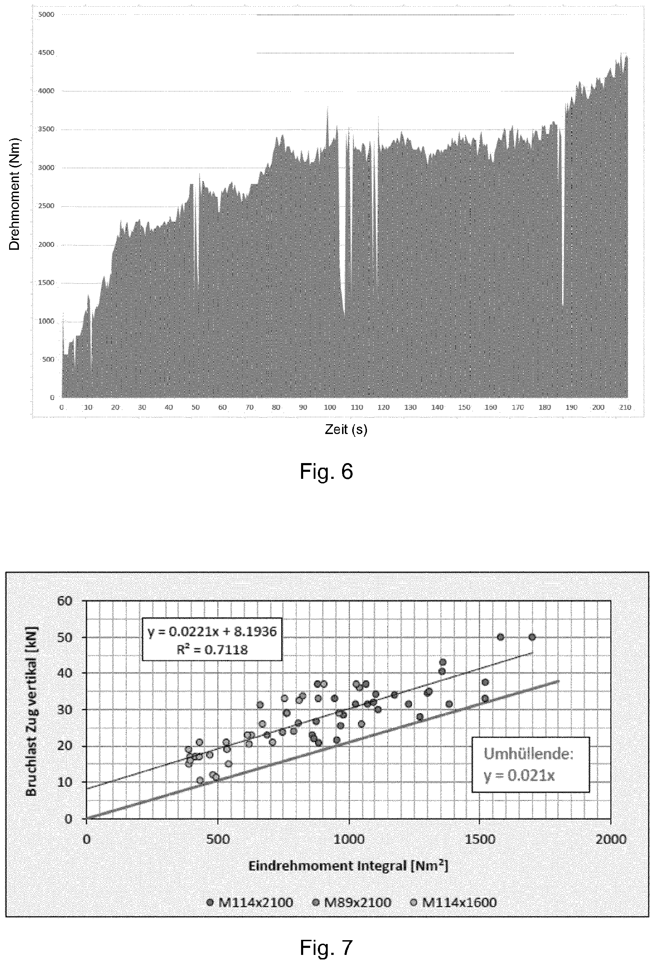

Wie oben schon erwähnt, kann während der Eindrehung der Schraubfundamente auch die Eindrehzeit gemessen werden. Dies ermöglicht die Erstellung einer Eindrehmoment-Zeit-Kurve. Ein Beispiel einer solchen Kurve ist in Figur 6 gezeigt. Gut zu erkennen sind die Phasen der Insertion, in denen die Insertion nicht regelmässig stattgefunden hat, in denen aber das Fundament geschlupft ist. Diese "Schlupf-Analyse" kann daher zusätzliche wichtige Informationen für die Bestimmung der "schlechtesten" Schraubfundamente liefern.

Es konnte ausserdem auch gezeigt werden, dass es einen engen Zusammenhang zwischen der Eindrehmoment-Weg-Kurve und der Bruchlast eines Schraubfundaments gibt. Figur 7 zeigt einen Graph, welcher diesen Zusammenhang demonstriert. Für verschiedene Schraubfundamentebauarten wurden der Betrag des Eindrehmoment-Weg-Integrals und die Last, die einen Bruch verursacht, gemessen und verglichen. Wie man diesem Graph entnehmen kann, gibt es zwischen diesen Werten eine hohe Korrelation. Anhand des Drehmomentintegrals ist es also möglich die "schlechtesten" Schraubfundamente, also die Fundamente, die nur eine kleine Last tragen können, zu identifizieren.

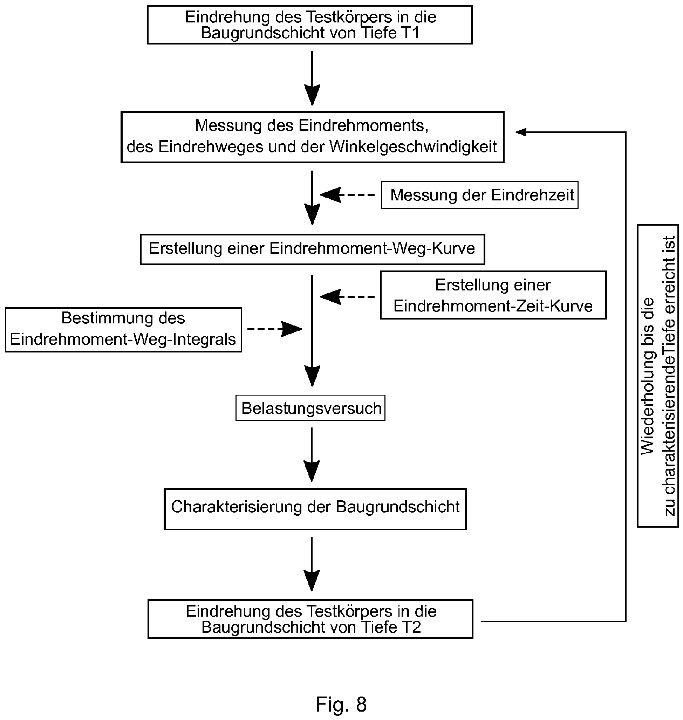

Figur 8 illustriert eine bevorzugte Ausführungsform des vorgeschlagenen Verfahrens für die Baugrundcharakterisierung. In dieser Ausführungsform fängt das vorgeschlagene Verfahren mit der Eindrehung des Testkörpers in eine Baugrundschicht von Tiefe T1. Während der Eindrehung werden Eindrehweg und Eindrehmoment und Winkelgeschwindigkeit kontinuierlich gemessen. Anschliessend wird eine Eindrehmoment-Weg-Kurve erstellt. Wie in dieser Figur dargestellt, können auch die Eindrehzeit gemessen und eine Eindrehmoment-Zeit-Kurve erstellt werden. Wenn der Testkörper die Tiefe T1 erreicht hat, wird ein Belastungsversuch durchgeführt und das Verhalten des Testkörpers (zum Beispiel Verschiebungsbetrag und Verschiebungsgeschwindigkeit) dabei gemessen. Aufgrund der Eindrehmoment-Weg-Kurve und des Verhaltens des Testkörpers während des Belastungsversuches wird die Baugrundschicht von Tiefe T1 charakterisiert. Wie in der Figur gezeigt, wiederholt sich schichtweise Baugrundcharakterisierung bis die zu charakterisierende Tiefe erreicht ist.

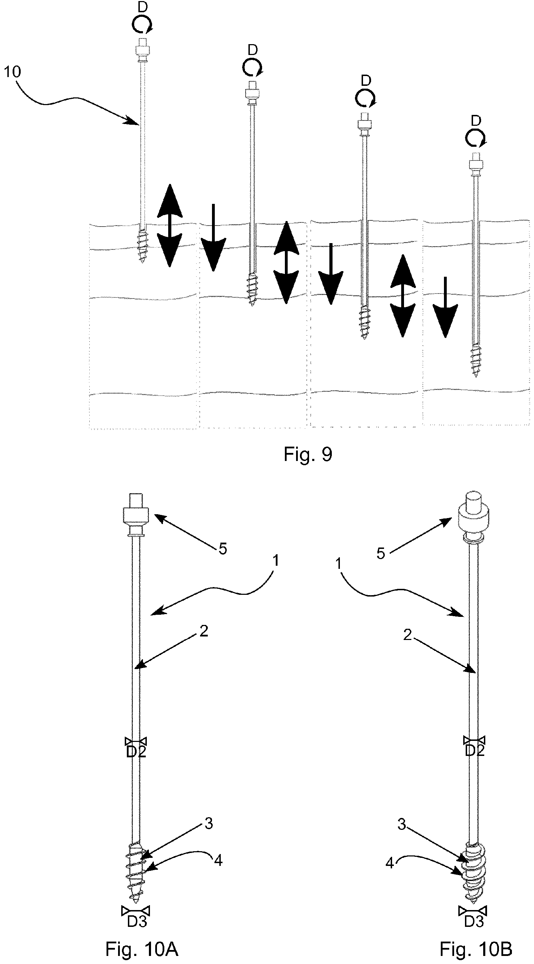

Figur 9 illustriert eine bevorzugte Ausführungsform des vorgeschlagenen Verfahrens zur Baugrundcharakterisierung. Wie in dieser Figur zu sehen ist, wird der Testkörper 10 schrittweise in den Baugrund eingedreht und zwischen zwei Eindrehschritten wird ein Belastungsversuch durchgeführt.

Figur 10A und 10B illustrieren eine bevorzugte Ausführungsform der vorgeschlagenen Vorrichtung 1 zur Baugrundcharakterisierung. Die Vorrichtung 1 umfasst einen zylinderförmigen Teil 2 mit Aussendurchmesser D2 und einen konusförmigen Teil 3 mit maximalem Aussendurchmesser D3 und Aussengewinde 4. In dieser bevorzugten Ausführungsform umfasst die Vorrichtung 1 weiter einen Kopplungsteil 5, welcher die Kopplung der Vorrichtung 1 mit einer Eindrehmaschine (hier nicht gezeigt) mit integrierter Belastungsvorrichtung ermöglicht.

Zum Schluss sei nochmals darauf hingewiesen, dass die hier beispielhaft beschriebenen Ausführungsformen nur Realisierungsmöglichkeiten der erfindungsgemässen Ideen darstellen und keinesfalls als limitierend angesehen werden sollen. Der Fachmann wird verstehen, dass noch andere Implementierungen der Erfindung und weitere Elemente möglich sind, ohne dass die wesentlichen Merkmale der Erfindung vernachlässigt werden. Insbesondere ist zu beachten, dass die verschiedenen erfindungsgemässen Verfahren miteinander kombiniert werden können. So kann zum Beispiel zuerst das Verfahren zur Baugrundcharakterisierung angewendet werden gefolgt von der Eindrehung von Schraubfundamenten und der Anwendung des Verfahrens zur Bestimmung der Schraubfundamente an welchen eine Belastungsprüfung durchgeführt werden soll. Im weiteren sei darauf hingewiesen, dass das erfindungsgemässe Verfahren zur Baugrundcharakterisierung auch erlaubt, unterirdische Strukturen wie beispielsweise Flussläufe oder Baugrundveränderungen aufgrund zivilisatorischer Aktivitäten zu lokalisieren und entdecken.

## Patentansprüche

1. Verfahren zur Überprüfung der Tragfähigkeit von Schraubfundamenten umfassend die folgenden Schritte:
a. Eindrehung der Schraubfundamenten in den Boden,
b. Bestimmung der Schraubfundamente an welchen eine Belastungsprüfung zur Überprüfung der Tragfähigkeit durchgeführt werden soll,
c. Durchführung der Belastungsprüfung an den bestimmten Schraubfundamenten,
**dadurch gekennzeichnet,**
**dass** für jedes Schraubfundament das Eindrehmoment und der Eindrehweg während der Eindrehung kontinuierlich gemessen werden, dass für jedes Schraubfundament eine Eindrehmoment-Weg-Kurve erstellt wird, und dass die Bestimmung der Schraubfundamente, an welchen eine Belastungsprüfung durchgeführt werden soll, auf der Basis der Eindrehmoment-Weg-Kurve gemacht wird.

2. Verfahren gemäss Anspruch 1, **dadurch gekennzeichnet, dass** zusätzlich der Eindrehvorgang so aufgezeichnet wird, dass eine Eindrehmoment-Zeit-Kurve erstellt wird und dass die Bestimmung der Schraubfundamente, an welchen die Belastungsprüfung durchgeführt werden soll, zusätzlich auf der Basis der Eindrehmoment-Zeit-Kurve gemacht wird.

3. Verfahren gemäss einem der Ansprüche 1 oder 2, **dadurch gekennzeichnet, dass** während der Eindrehung zusätzlich die Winkelgeschwindigkeit gemessen wird, dass ein Vergleich zwischen dem Eindrehrotationsweg und dem Eindrehweg gemacht wird, und dass die Bestimmung der Schraubfundamente, an welchen die Belastungsprüfung durchgeführt werden soll, auf der Basis dieses Vergleichs gemacht wird.

4. Verfahren gemäss einem der Ansprüche 1 bis 3, **dadurch gekennzeichnet, dass** die Bestimmung der Schraubfundamente, an welchen die Belastungsprüfung durchgeführt werden soll, zusätzlich auf der Basis von vorhergehenden Bodenbeurteilungen gemacht wird.

5. Verfahren gemäss einem der vorherigen Ansprüche, **dadurch gekennzeichnet, dass** die Bestimmung der Schraubfundamente, an welchen die Belastungsprüfung durchgeführt werden soll, auf der Basis des Betrags des Eindrehmoment-Weg-Kurve-Integrals gemacht wird.

6. Verfahren gemäss einem der vorherigen Ansprüche, **dadurch gekennzeichnet, dass** die Bestimmung der Schraubfundamente, an welchen die Belastungsprüfung durchgeführt werden soll, auf der Basis des Eindrehmomentmaximums gemacht wird.

7. Verfahren gemäss einem der vorherigen Ansprüche, **dadurch gekennzeichnet, dass** die Bestimmung der Schraubfundamente, an welchen die Belastungsprüfung durchgeführt werden soll, auf der Basis des Eindrehmomentendwerts gemacht wird.

8. Verfahren gemäss einem der vorherigen Ansprüche, **dadurch gekennzeichnet, dass** die Bestimmung der Schraubfundamente, an welchen die Belastungsprüfung durchgeführt werden soll, zusätzlich auf der Basis der am Schraubfundament abzutragenden Last gemacht wird.

9. Verfahren gemäss einem der vorherigen Ansprüche, **dadurch gekennzeichnet, dass** nach der Eindrehung des Schraubfundaments das Fundaments zurückgedreht wird, und dass während der Rückwärtsdrehung das Drehmoment und der Weg gemessen werden, dass eine Drehmoment-Weg-Kurve für die Rückwärtsdrehung erstellt wird, und dass die Bestimmung der Schraubfundamente, an welchen die Belastungsprüfung durchgeführt werden soll, zusätzlich auf der Basis der Drehmoment-Weg-Kurve für die Rückwärtsdrehung gemacht wird.

## Claims

1. Method for checking the load-bearing capacity of screw-in foundations comprising the following steps:
a. Screwing the screw-in foundations into the ground,
b. Determining the screw-in foundations on which a load test to check the load bearing capacity is to be performed,
c. Performing the load test on the determined screw-in foundations,
**characterized in**
**that** for each screw-in foundation the screw-in torque and the screw-in path are continuously measured during the screwing in, that for each screw-in foundation an insertion torque-displacement curve is established, and that the determination of the screw-in foundations on which a load test is to be performed is made on the basis of the insertion torque-displacement curve.

2. Method according to claim 1, **characterized in that** in addition the screw-in step is recorded in such a way that an insertion torque-time curve is established and **in that** the determination of the screw-in foundations on which the load test is to be performed is made additionally on the basis of the insertion torque-time curve.

3. Method according to one of the claims 1 or 2, **characterized in that** during the screwing in the angular velocity is additionally measured, that a comparison is made between the insertion rotation path and the insertion travel, and **in that** the determination of the screw-in foundations on which the load test is to be performed is made on the basis of this comparison.

4. Method according to one of the claims 1 to 3, **characterized in that** the determination of the screw-in foundations on which the load test is to be performed is made additionally on the basis of previous ground or soil assessments.

5. Method according to one of the preceding claims, **characterized in that** the determination of the screw-in foundations on which the load test is to be performed is made on the basis of the magnitude of the insertion torque displacement curve integral.

6. Method according to one of the preceding claims, **characterized in that** the determination of the screw-in foundations on which the load test is to be performed is made on the basis of the maximum insertion torque.

7. Method according to one of the preceding claims, **characterized in that** the determination of the screw-in foundations on which the load test is to be performed is made on the basis of the final torque limit value.

8. Method according to one of the preceding claims, **characterized in that** the determination of the screw-in foundations on which the load test is to be performed is made additionally on the basis of the load to be supported on the screw-in foundation.

9. Method according to one of the preceding claims, **characterized in that** after the screwing in of the screw-in foundation, the foundation is turned back, and **in that** during the reverse rotation the torque and the displacement are measured, **in that** a torque-displacement curve is established for the reverse rotation, and **in that** the determination of the screw-in foundations on which the load test is to be performed is made additionally on the basis of the torque-displacement curve for the reverse rotation.

## Revendications

1. Procédé de vérification de la capacité de charge de fondations vissées comprenant les étapes suivantes :
a. Visser des fondations vissées dans le sol,
b. Déterminer des fondations vissées sur lesquelles un essai de charge est à effectuer pour contrôler leur capacité de charge,
c. Effectuer l'essai de charge sur les fondations vissées déterminées,
**caractérisé en ce que**
pour chaque fondation vissée, le couple de vissage et la course de vissage sont mesurés de manière continue lors du vissage, que pour chaque fondation vissée une courbe de couple - course d'insertion est établie, et **en ce que** la détermination des fondations vissées sur lesquelles un essai de charge doit être effectué est faite sur la base de la courbe de couple - course d'insertion.

2. Procédé selon la revendication 1, **caractérisé en ce que** l'étape de vissage est enregistrée par ailleurs de telle sorte qu'une courbe de couple en fonction du temps est établie, et **en ce que** la détermination des fondations vissées sur lesquels l'essai de charge doit être effectué est établie de manière additionnelle sur la base de la courbe du couple en fonction du temps.

3. Procédé selon l'une des revendications 1 ou 2, **caractérisé en ce que**, lors du vissage, la vitesse angulaire est mesurée additionnellement, **en ce qu'**une comparaison est faite entre le chemin d'avancement en rotation d'insertion et la course d'insertion, et **en ce que** la détermination des fondations vissées sur lesquelles l'essai de charge doit être effectué est faite sur la base de cette comparaison.

4. Procédé selon l'une des revendications 1 à 3, **caractérisé en ce que** la détermination des fondations vissées sur lesquelles l'essai de charge doit être effectué est faite additionnellement sur la base d'évaluations antérieures du sol ou de la terre.

5. Procédé selon l'une des revendications précédentes, **caractérisé en ce que** la détermination des fondations vissées sur lesquelles l'essai de charge doit être effectué est faite sur la base de l'amplitude de l'intégrale de la courbe de déplacement du couple de vissage lors de l'insertion.

6. Procédé selon l'une des revendications précédentes, **caractérisé en ce que** la détermination des fondations vissées sur lesquelles l'essai de charge doit être effectué est faite sur la base du couple de vissage maximal.

7. Procédé selon l'une des revendications précédentes, **caractérisé en ce que** la détermination des fondations vissées sur lesquelles l'essai de charge doit être effectué est faite sur la base de la valeur finale du couple de vissage.

8. Procédé selon l'une des revendications précédentes, **caractérisé en ce que** la détermination des fondations vissées sur lesquelles l'essai de charge doit être effectué est faite additionnellement sur la base de la charge à supporter sur la fondation à visser.

9. Procédé selon l'une des revendications précédentes, **caractérisé en ce qu'**après l'insertion de la fondation vissée, la fondation est dévissée, et **en ce que** pendant la rotation inverse le couple et la course sont mesurés, **en ce qu'**une courbe couple - course de dévissage est établie pour la rotation inverse, et **en ce que** la détermination des fondations vissées sur lesquelles l'essai de charge doit être effectué est faite additionnellement sur la base de la courbe couple - course de dévissage lors de la rotation inverse.
